# EUROPÄISCHE PATENTSCHRIFT

(11) **EP 1 059 214 B1**
(45) Veröffentlichungstag und Bekanntmachung des Hinweises auf die Patenterteilung: **10.12.2003**
(21) Anmeldenummer: 00105620.9
(22) Anmeldetag: 16.03.2000
(51) Int. Cl.: B60S 3/00, B65G 15/44, B65G 19/02

(54) **Beförderungseinheit**
Transporting device
Dispositif de transport

(30) Priorität: 29.05.1999 DE 19924789
(43) Veröffentlichungstag der Anmeldung: 13.12.2000
(73) Patentinhaber: Weigele, Gebhard, 86356 Neusäss (DE)
(72) Erfinder: Weigele, Gebhard, 86356 Neusäss (DE)
(74) Vertreter: Gehrsitz, Stefan, Dr.

(56) Entgegenhaltungen:
- DE-A- 4 226 826
- US-A- 4 690 065
- PATENT ABSTRACTS OF JAPAN vol. 1998, no. 05, 30. April 1998 (1998-04-30) & JP 10 025015 A (CENTRAL MOTOR CO LTD), 27. Januar 1998 (1998-01-27)

## Beschreibung

Die Erfindung betrifft eine Beförderungseinheit zum Transport von Fahrzeugen in Fahrzeugwaschanlagen.

Aus der deutschen Patentschrift DE 3732542 C1 ist eine Vorrichtung zum Befördern von Kraftfahrzeugen in Fahrzeugwaschanlagen bekannt.

Diese Vorrichtung weist zwei zueinander parallel verlaufende, endlose Förderketten auf, zwischen denen Lagerachsen mit Mitnehmerrollen angeordnet sind. Die Förderketten werden durch in Kettenlängsrichtung verlaufende Kettenführungsschienen geführt.

Der Erfindung liegt die Aufgabe zugrunde, eine robuste und einfache Ausgestaltung einer Beförderungseinheit anzugeben, bei der die Räder der zu tranportierenden Fahrzeuge fixierbar sind.

Gemäß der Erfindung wird die gestellte Aufgabe durch den Patentanspruch 1 gelöst.

Die Erfindung bringt den Vorteil mit sich, daß keine einem hohen Verschleiß unterliegenden in Gleitschienen zu führenden Förderketten verwendet werden müssen.

Die Erfindung bringt den Vorteil mit sich, daß auf den Einsatz von Förderketten verzichtet werden kann.

Die Erfindung bringt den Vorteil mit sich, daß ein ruckfreier und kontinuierlicher Transport von Fahrzeugen durch beispielsweise eine Waschstraße einer Fahrzeugreinigungsanlage ermöglicht wird.

Die Erfindung bringt den Vorteil mit sich, daß die Auflagefläche des Rades bzw. Reifens kraftschlüssig auf dem Fördergurt positioniert ist, wobei die durch Waschaggregate hervorgerufenen und auf das zu befördernde Fahrzeug wirkenden Kräfte keinen Einfluß auf das Fahrzeug haben.

Die Erfindung bringt den Vorteil mit sich, daß die Reifen oder Felgen der Räder während des Transportes nicht beschädigt werden.

Die Erfindung bringt den Vorteil mit sich, daß die Beförderungseinheit eine große Betriebssicherheit aufweist.

Die Erfindung bringt den Vorteil mit sich, daß die Beförderungseinheit aus wenigen Mitteln gebildet ist und dadurch mögliche Ausfallzeiten gering gehalten werden.

Die Erfindung bringt den weiteren Vorteil mit sich, daß von der Beförderungseinheit keine Unfallgefahr ausgeht und deshalb die Beförderungseinheit im Bereich der Einfahrt und der Ausfahrt beliebig verlängerbar ist. Dadurch wird des möglich, daß der Motor des Fahrzeugs bereits vor der Waschstraße ausgeschaltet und erst nach Verlassen des Waschstraße angelassen werden muß.

Die Erfindung bringt den Vorteil mit sich, daß die Beförderungseinheit geräuscharm arbeitet.

Die Erfindung bringt weiter den Vorteil mit sich, daß aufgrund einer Verlängerung der Fördereinheit vor der Waschstraße und ihrer erhöhten Betriebssicherheit eine beispielsweise manuelle Vorbehandlung eines bereits auf dem Fördergurt fixierten Fahrzeuges erfolgen kann.

Weitere vorteilhafte Weiterbildungen der Erfindung sind in den Unteransprüchen angegeben.

Weitere Besonderheiten werden aus der nachfolgenden näheren Erläuterung von Ausführungsbeispielen der Erfindung anhand von Zeichnungen ersichtlich.

Es zeigen:
- Fig. 1: eine Ansicht einer ersten Ausführungsform einer Beförderungseinheit gemäß der Erfindung,
- Fig. 2: einen Querschnitt durch die Beförderungseinheit der ersten Ausführungsform,
- Fig. 3: einer zweiten Ausführungsform,
- Fig. 4: einer dritten Ausführungsform,
- Fig. 5: eine Ansicht einer vierten Ausführungsform,
- Fig. 6: einen Querschnitt durch die Beförderungseinheit der zweiten Ausführungsform,
- Fig. 7: eine Ansicht einer fünften Ausführungsform der Beförderungseinheit,
- Fig. 8: einen Querschnitt durch eine weitere Ausgestaltung der Beförderungseinheit,
- Fig. 9: einen Querschnitt durch die Beförderungseinheit der weiteren Ausführungsformen nach Fig.7 und Fig.8,
- Fig. 10: eine schematische Darstellung einer Mitnahme von Fahrzeugen,
- Fig. 11: eine weitere schematische Darstellung einer Mitnahme von Fahrzeugen , und
- Fig. 12: eine weitere schematische Darstellung einer Mitnahme von Fahrzeugen.

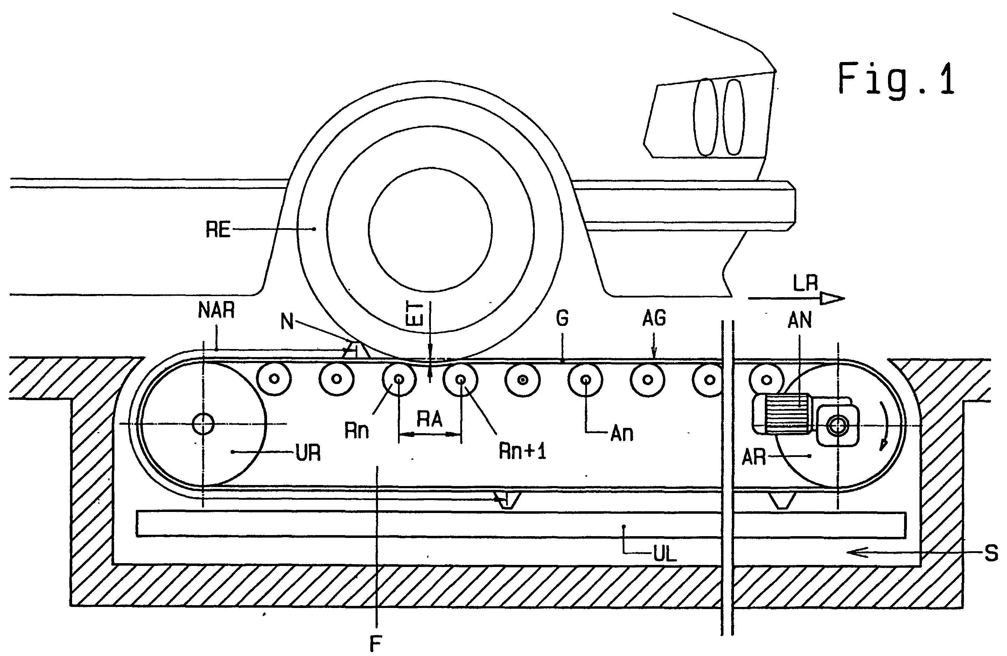

Fig. 1 zeigt eine Ansicht einer ersten Ausführungsform einer Beförderungseinheit F. Die Beförderungseinheit F besteht im Wesentlichen aus einem als Endlosband ausgebildeten Fördergurt G der zwischen Umlenkmitteln, gebildet aus einer ersten und zweiten Umlenkrolle UR, AR, eingespannt ist. Zwischen den Umlenkmitteln sind eine Vielzahl von Transportmitteln angeordnet auf denen der Fördergurt G aufliegt.

Der Fördergurt G wird durch die erste als Antriebsrolle AR ausgebildete Umlenkrolle in Laufrichtung LR in Bewegung versetzt und gehalten.
Der Antrieb AN der Beförderungseinheit F kann dazu seitlich an der Antriebsrolle AR angeordnet sein.

Der Fördergurt G besitzt eine der Antriebsrolle AR sowie der Umlenkrolle UR abgewandte erste Oberfläche die auch als Arbeitsfläche AG bezeichnet werden kann und eine der Antriebsrolle AR sowie der Umlenkrolle UR zugewandte zweite Oberfläche. Auf der Arbeitsfläche AG des Fördergurtes G sind nockenförmige Ausbildungen quer zur Laufrichtung LR des Fördergurtes G angeordnet. Nachfolgend werden die nockenförmigen Ausbildungen als Nocken N bezeichnet. Der Querschnitt einer Nocke N ist vorzugsweise trapezförmig ausgebildet.

Die Umlenkrolle UR am Anfang des Fördergurtes G, kann ebenso die Funktion der Antriebsrolle AR übernehmen. Die Antriebsrolle AR und/oder die Umlenkrolle UR sind mindestens horizontal versetzbar, so daß der Fördergurt G in Laufrichtung LR gespannt werden kann. Die Antriebsrolle AR bzw. Umlenkrolle UR sind an einem Trägergerüst TR befestigt, so daß die gesamte Beförderungseinheit F in einem Schacht S eingefügt werden kann.

Einen Teil der Transportmittel Rn werden in dieser Ausführungsform durch Rollen Rn gebildet, die wie die Ausgestaltung in Figur 1 zeigt in einer Ebene mit gleichem Höhenniveau unterhalb der Arbeitsfläche AG des Fördergurtes G angeordnet sind. Die Achsen An der Rollen Rn sind ebenfalls in dem Trägergerüst TR gelagert.

Die Abstände RA der Achsen An der Rollen Rn sind im Wesentlichen äquidistant. Der Durchmesser der Rollen Rn und die Position der Achsen An sind derart aufeinander abgestimmt, daß die Arbeitsfläche AG des Fördergurtes G das gleiche Höhenniveau der Oberfläche des Bodens um die Beförderungseinheit F aufweist.

Die Abstände RA der Achsen An der Rollen Rn unterhalb der Arbeitsfläche AG des Fördergurtes G weisen einen derartig Abstand auf, so daß es vorzugsweise durch die Räder RE des Fahrzeugs zu einer Vertiefung der Arbeitsfläche AG bzw. zu einer Absenkung des Fördergurtes G kommt.

Der Abstand RA zwischen zwei benachbarten Rollen Rn, Rn+1 unterhalb der Arbeitsoberfläche AG des Fördergurtes G wird derart vergrößert, daß durch das Gewicht eines auf der Arbeitsfläche AG des Fördergurtes G positionierten Rades RE eine Vertiefung zwischen den Rollen Rn, Rn+1 gebildet wird. Der Rollenabstand RA wird so gewählt, daß einerseits die notwendige Einsinktiefe ET zur Fixierung des Rades RE erreicht und andererseits die dadurch hervorgerufene Welligkeit der Arbeitsfläche AG des Fördergurtes G während des Transportes kaum spürbar für eine im Fahrzeug sitzende Person ist.

Die Übergänge in Laufrichtung LR des Fördergurtes G sind so ausgestaltet, daß beim Übergang zwischen einer Auffahrt und dem Fördergurt G nur ein kleiner Spalt verbleibt. Die Übergänge des Schachtes S weisen dazu in ihrem jeweiligen oberen Bereichen einen Vorsprung oder eine Krümmung in Richtung der Umlenkrollen des Fördergurtes G auf. Die Krümmung in diesen Bereichen entspricht annähernd der Krümmung der Umlenkrolle UR bzw. der Antriebsrolle AR.

Auf dem Fördergurt G sind gemäß der Erfindung Nocken N in der Art angeordnet, daß ein auf den Fördergurt G rollendes Vorderrad RE eines Fahrzeuges von einer Nocke des Fördergurtes G mitgenommen wird und dort zum Stillstand kommt. Die Nocke N die unmittelbar hinter dem Vorderrad RE positioniert ist, ist derart ausgeprägt, daß der Rollwiderstand und die von den Waschaggregaten auftretenden Kräfte überwunden werden.

Die Höhe NH der Nocke N liegt etwa zwischen 30 bis 60 mm und ist vorzugsweise etwa 40 mm hoch.

Der Nockenabstand NAR zwischen der ersten Nocke N hinter dem Vorderrad und einer ersten Nocke N die hinter dem Hinterrad des zu befördernden Fahrzeuges ist etwas größer als der größte Achsenabstand der bekannten Serienfahrzeuge. Vorzugsweise sollte er zwischen 300 bis 325 cm liegen. Über die Länge des Fördergurtes G verteilt können eine Mehrzahl solcher ersten Nocken N mit dem genannten Nockenabstand NAR hintereinander auf dem Fördergurt G angeordnet sein.

Die Nocke N des kann ebenso eine Mitnahme des Hinterrades des Fahrzeuges übernehmen.

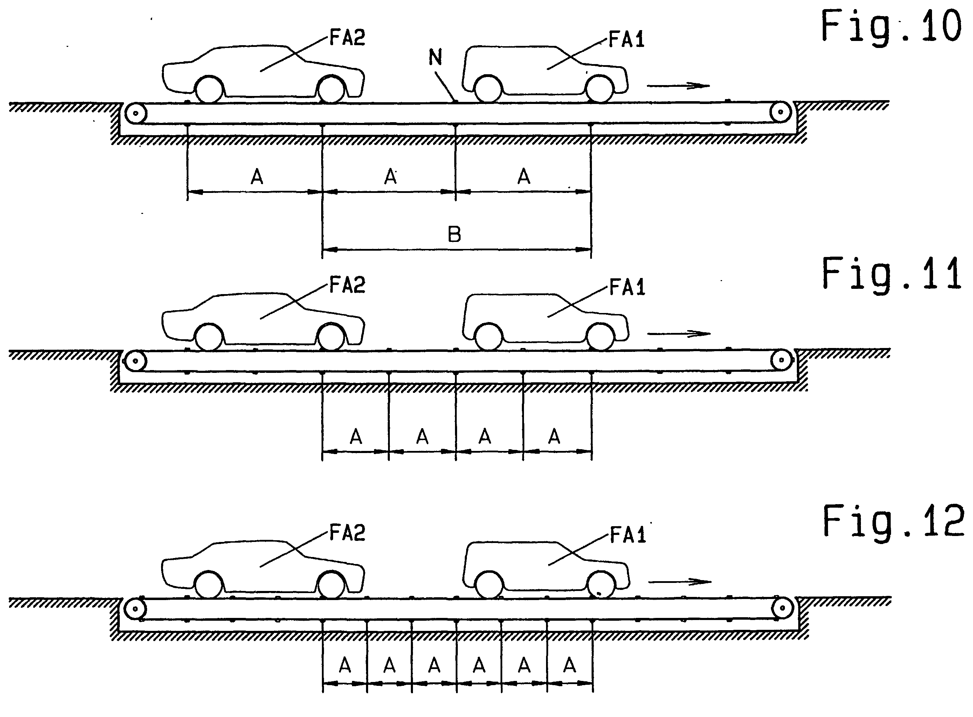

Eine Verteilung der auf dem Fördergurt G zu positionierenden Nocken N ist in den Figuren 10, 11 und 12 gezeigt.

Als Material des Fördergurtes G können alle handelsüblichen Fördergurte verwendet werden.

An seiner Unterseite kann der Fördergurt G aufgerauht sein oder ein Profil gebildet aus Zähnen oder Rippen aufweisen, die sich quer zur Laufrichtung LR des Fördergurtes G erstrekken. Diese Ausgestaltung kann zu einer besseren Haftung des Fördergurtes G auf den Umlenkrollen AR, UR führen. Zusätzlich können die Umlenkrollen AR, UR in kurzen Abständen Nuten aufweisen, die bei einer Umlenkung des Fördergurtes G auf den Umlenkrollen AR, UR in Wirkverbindung mit den auf der Unterseite der Fördergurtes G angebrachten Zähnen oder Rippen stehen. Statt Nuten kann auch ein Profil vorgesehen sein. Beim Betrieb des Fördergurtes G greifen die Zähne und die Nuten ineinander, so daß der Fördergurt G auf den Umlenkrollen AR, UR sicher in Bewegung versetzt und ohne einen Schlupf in Bewegung gehalten werden kann.

Das formschlüssig an den Fördergurt G angedrückte Rad RE wird am Wegrollen gehindert. Die Muldenbildung des formschlüssig an das Rad RE gedrückten Fördergurtes G und die Mitnahmewirkung der hinter dem Rad RE angeordneten Nocke N bewirken die Fixierung,des Rades RE und dessen Transport auf dem Fördergurt G. Der Abstand RA der Achsen der Rollen Rn, Rn+1 könnte dabei in vorteilhafter Weise 125 mm bei einem Rollendurchmesser von ca 80 bis 120mm betragen.

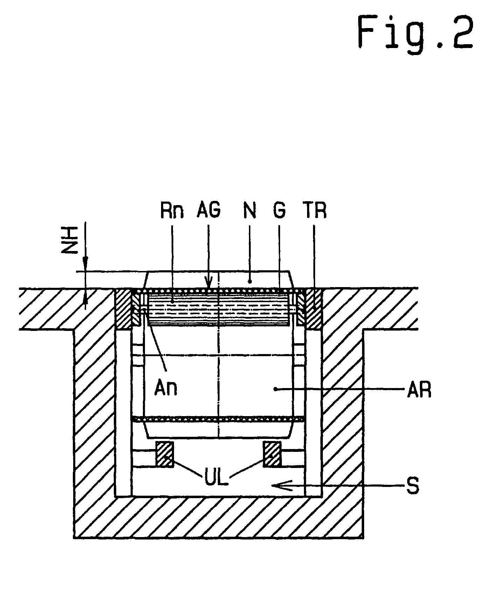

In Figur 2 ist eine Queransicht durch die Beförderungseinheit F der ersten Ausführungsform.dargestellt. An der Trägereinheit TR sind die Achsen An der Rollen Rn höhenmäßig derart befestigt, daß unter Berücksichtigung des Durchmessers der Rollen Rn und der Dicke des Fördergurtes G die Arbeitsfläche AG des Fördergurtes G annähernd das gleiche Höhenniveau des sie umgebenden Bodens aufweist. Der Rücklauf des Fördergurtes G kann über Gleitschienen UL erfolgen.

Die Länge der Rollen Rn erstreckt sich annähernd über die Breite des Fördergurtes G. Die Breite des Fördergurtes G ist größer als die Breite des Rades RE des zu befördernden Fahrzeuges.

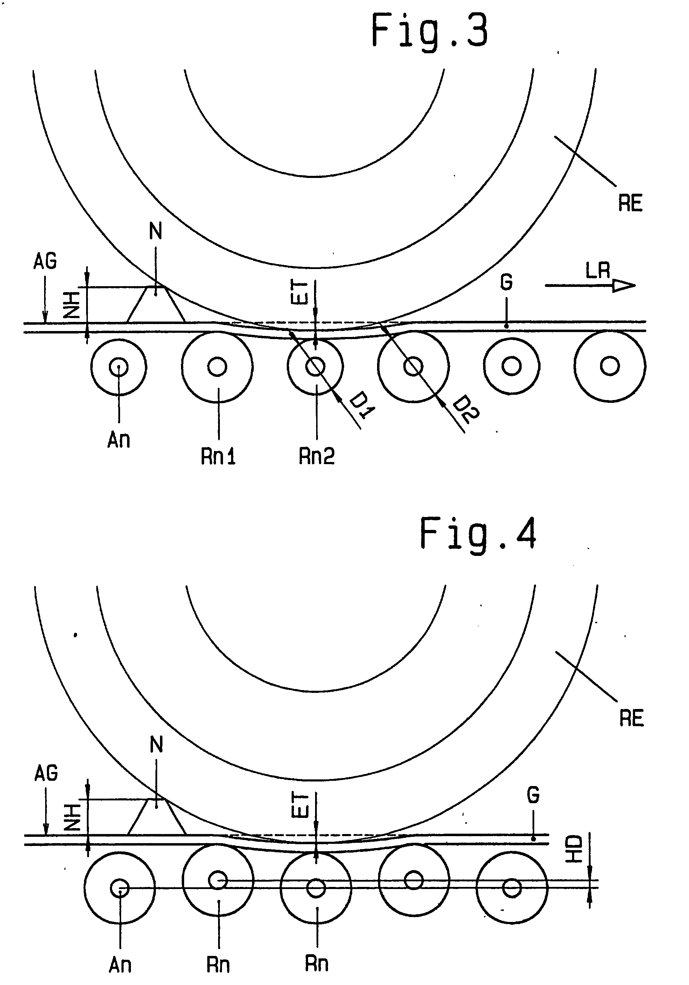

In Fig. 3 und 4 ist jeweils eine Detailansicht der Beförderungseinheit F wiedergegeben. In diesen Detailansichten werden zwei weitere Möglichkeiten angegeben wie eine Fixierung des Rades auf dem Fördergurtes G erhöht wird.

In Fig. 3 sind die Achsen An von ersten und zweiten Rollen Rn1, Rn2 auf gleichem Höhenniveau angeordnet. Die Rollen Rn1, Rn2 weisen erste und zweite Durchmesser D1, D2 auf. Die ersten und zweiten Rollen Rn1, Rn2 sind abwechselnd angeordnet. Eine partielle Einsinktiefe ET der Arbeitsfläche AG des Fördergurtes G resultiert aus der Differenz der Durchmesser D1, D2 der ersten und zweiten Rollen Rn1, Rn2.

In der Ausgestaltung wie in Figur 4 gezeigt, weisen die Rollen Rn einen gleichen Durchmesser auf, jedoch sind die Achsen auf einem ersten und zweiten Höhenniveau angeordnet. Die Achsen der Rollen sind zu den unmittelbar benachbarten Achsen der Rollen alternierend auf einen ersten und zweiten Höhenniveau positioniert. Der Unterschied HD von einem ersten Höhenniveau zu einem zweiten Höhenniveau beträgt vorzugsweise ca. 1,5 cm.

Mit einer Kombination der beiden wie in Figur 3, 4 gezeigten Ausführungsvarianten kann ebenfalls die erforderliche Fixierung des Reifens RE auf dem Fördergurt G erreicht werden. Die durch Waschaggregate hervorgerufenen und auf das zu befördernde Fahrzeug wirkenden Kräfte haben keinen Einfluß auf die Fixierung des Fahrzeugs. Ein Wegrollen des Fahrzeuges wie bei herkömmlichen Transporteinrichtungen wird durch die Fixierung des Rades verhindert.

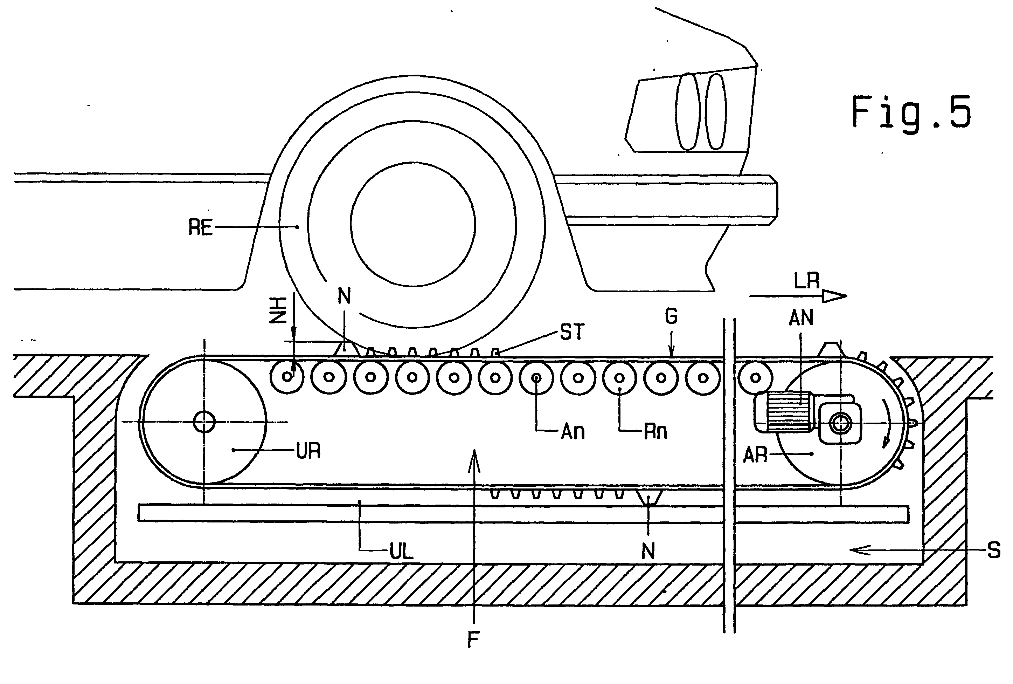

In Figur 5 ist eine Ausgestaltung der Oberfläche der Arbeitsfläche AG des Fördergurtes G der Beförderungseinheit F dargestellt. Bei dieser Ausgestaltung wird die Fixierung des Rades RE durch Noppen ST bewirkt. Diese Noppen ST.sind derart ausgestaltet, daß sie zumindest teilweise in das Reifenprofil des zu transportierenden Rades eingreifen. Die Noppen ST auf dem Fördergurt G können in vorteilhafter Weise jeweils auf einem ausreichend großes Teilstück des Fördergurtes G vor der Mitnehmernocke beschränkt werden. Die Anordnung der Noppen ST dienen auch bei Fig. 5 der Fixierunng des Rades.

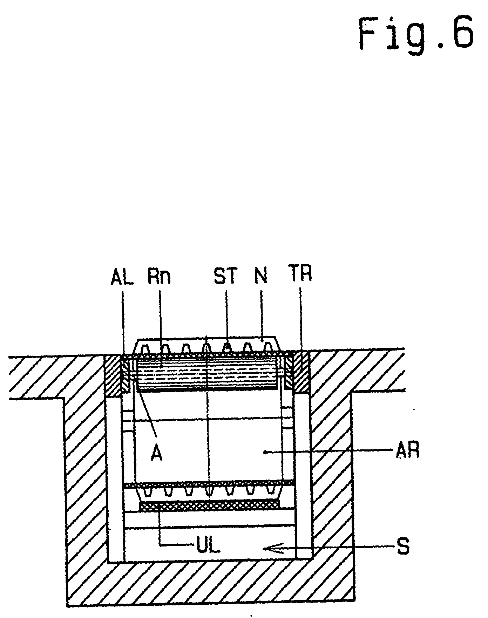

In Figur 6 ist eine Queransicht der Beförderungseinheit F gemäß der Ausgestaltung nach Figur 5 dargestellt. Diese Queransicht entspricht im Wesentlichen der Figur 2.

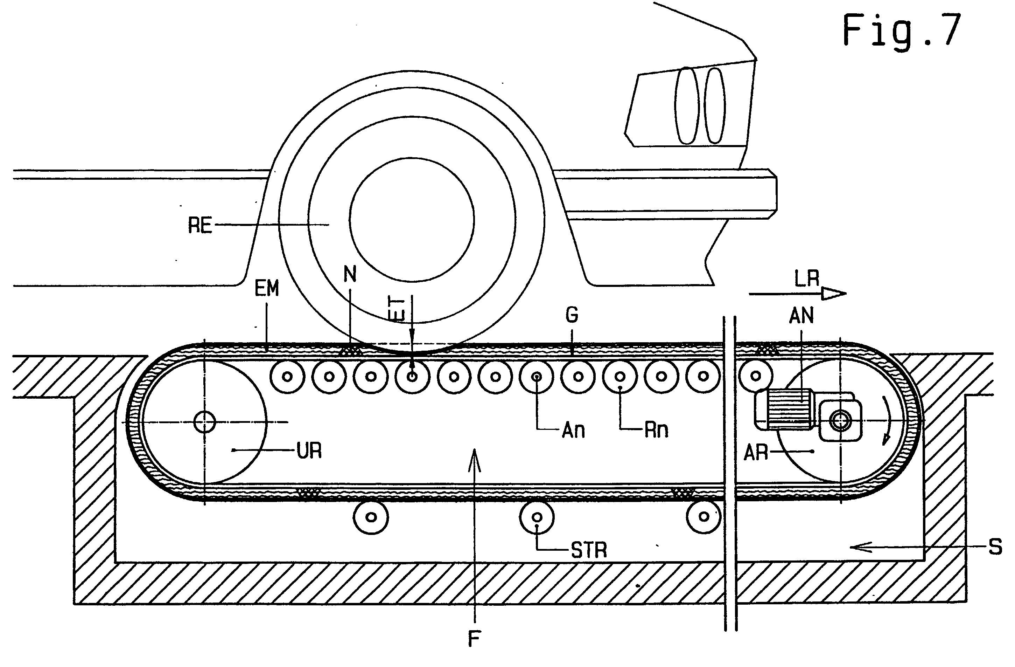

In Figur 7 ist die Arbeitsfläche AG des Fördergurtes G mit einem elastischen Material EM mit Rückformeigenschaft versehen. Dieses elastische Material EM kann beispielsweise aus Schaumgummi oder Gummigewebe bestehen. Das elastische Material EM kann auf dessen Oberseite mit einer Deckschicht versehen sein. Mit der Anordnung des elastischen Materials EM auf der Oberfläche des Fördergurtes G wird das Rad RE in Laufrichtung LR des Fördergurtes G fixiert. Die Anordnung der Rollen Rn unterhalb der Arbeitsfläche des Fördergurtes G in Laufrichtung LR entspricht im Wesentlichen der Anordnung der Rollen nach Figur 1. Im Bereich des Rücklaufes können der Fördergurt G über Stützelemente, insbesondere Stützrollen STR geführt werden. Innerhalb des elastischen Materials EM können quer zur Laufrichtung LR Verdickungen des Schaumstoffes vorgesehen oder Nocken integriert werden.

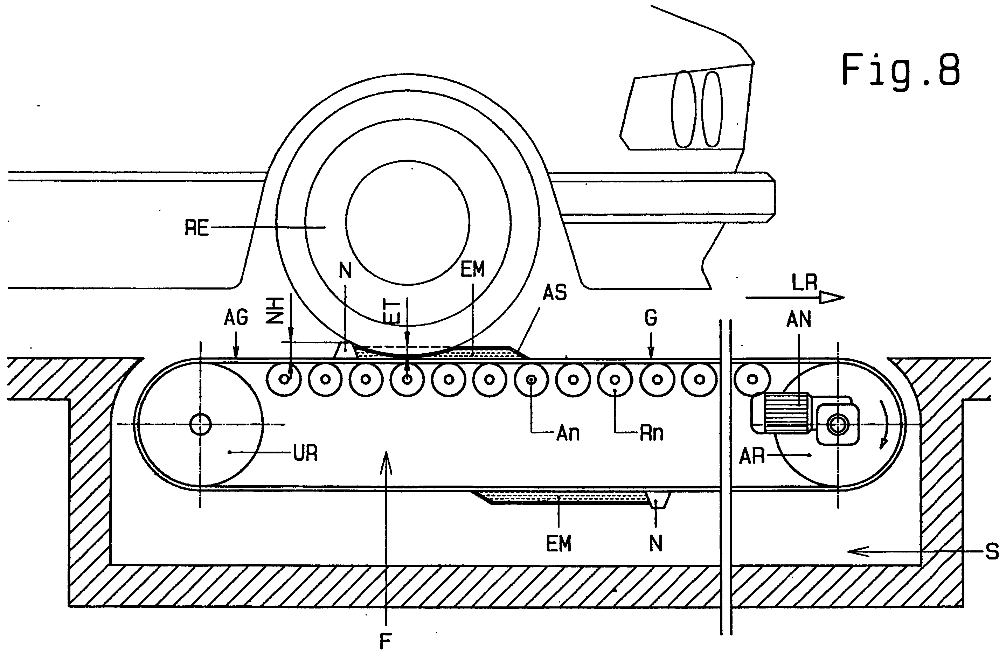

In Figur 8 ist eine weitere Ausgestaltung der Beförderungseinheit F, insbesondere die Ausgestaltung der Arbeitsfläche AG des Fördergurtes G gezeigt. Bei dieser Ausgestaltung werden Teilbereiche des Fördergurtes G vor den Nocken N mit dem elastischen Material EM versehen. Damit ein gleitender Übergang zwischen der Arbeitsfläche AG und dem elastischen Material EM erreicht wird, ist dieses im vorderen Bereich AS angeschrägt. Das Rad RE wird durch die Positionierung an der Nocke N in dem elastischen Material EM in der gezeigten Art derart fixiert, daß ein Wegrollen des Rades RE von der Nocke verhindert wird.

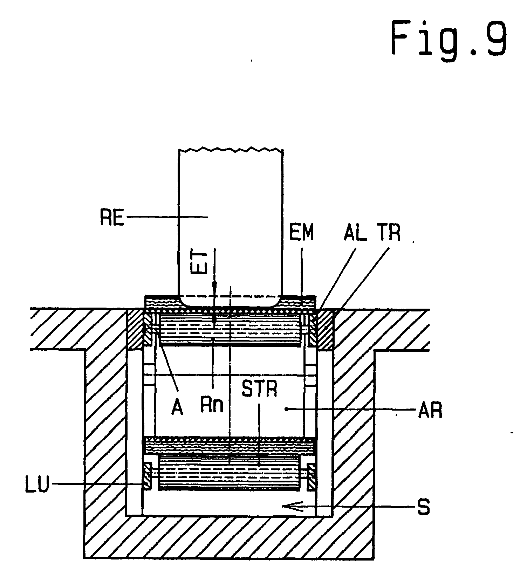

In Figur 9 ist die zu den Figuren 7 und 8 zugehörige Queransicht gezeigt. Bei dieser Queransicht ist die Anpassung des elastischen Materials EM an einen Reifen RE gezeigt. Durch die Einsinktiefe ET in das elastische Material EM wird das Rad RE fixiert. Die Aufhängung LU der Achsen A der für den Rücklauf vorgesehenen Rollen STR sowie die Aufhängungen AL der Rollen Rn sind in vorteilhafter Weise in dem Trägergerüst TR integriert.

In der Figur 10 ist eine Beförderungseinheit gezeigt bei der die Nocken N auf dem Fördergurt G einen optimierten Abstand zueinander haben.

Gelangt das Fahrzeug mit seinem Vorderrad auf den Fördergurt dreht das Vorderrad des Fahrzeuges in der Position verharrend bis eine Nocke das Vorderrad in Laufrichtung des Fördergurtes mitnimmt. Wie zuvor gezeigt und beschrieben dient die Nocke unmittelbar hinter dem Vorderrad zur Mitnahme des Fahrzeugs auf dem Fördergurt. Gelangt das Vorderrad des Fahrzeuges an das Ende des Fördergurtes, so wird das Vorderrad des Fahrzeuges von dem Fördergurt geschoben. Der Transport des Fahrzeuges wird für kurze Zeit unterbrochen. Die Verweilzeit des Fahrzeuges hängt dann von dessen Achsenabstand in Relation zum Nockenabstand auf dem Fördergurt ab. Die Nocke nach dem Hinterrad des Fahrzeuges schiebt das Fahrzeug dann von dem Fördergurt. In der Figur 10 ist die Verweilzeit des Fahrzeugs FA1 aufgrund des geringeren Achsenabstandes geringfügig länger als die des nachfolgenden Fahrzeugs FA2.

Der Abstand B der Nocken die jeweils ein Vorderrad eines Fahrzeuges mitnehmen beträgt zwischen 600 und 700 cm. Ein bevorzugter Abstand B der Nocken liegt zwischen 600 und 650 cm.

In der Figur 11 ist die Beförderungseinheit F mit den Fahrzeugen FA1, FA2 gezeigt. Bei den abgebildeten Fahrzeugen FA1, FA2 weisen die Achsenabstände der Fahrzeugtypen ebenso wie in Figur 10 Maximal- und Minimalwerte auf. Die Räder RE der Fahrzeuge werden wie zuvor beschrieben vor den Nocken N positioniert und von diesen mitgenommen. Der Abstand A der Nocke N zur nachfolgenden Nocke N ist so dimensioniert, daß weder das Hinterrad des Fahrzeugtyps FA1 noch das Hinterrad des zweiten Fahrzeugtyps FA2 oder das Hinterrad von weiteren Fahrzeugtypen die einen dazwischenliegenden Achsenabstand aufweisen auf einer Nocke aufsitzt.

Die Halbierung der Nockenabstände gemäß Fig. 11 hat den Vorteil, der geringen Wartezeit bei der Fahrzeugmitnahme nach der Auffahrt auf das Förderband. Die bevorzugten Nockenabstände liegen hier zwischen 300 und 325 cm.

In der Fig.12 ist ein Förderband mit einer Drittelung der Nockenabstände A wie sie aus Fig. 10 bekannt sind dargestellt. Die entstehenden Abstände von 200 bis 220 cm ermöglichen noch kürzere Wartezeiten der Fahrzeuge.

### Bezugszeichenliste:

- A: Abstand der Nocken
- An: Achse
- AR: Antriebsrolle
- AN: Antrieb
- AG: Arbeitsfläche des Fördergurtes
- AS: gleitender Übergang des elastischen Materials
- EM: elastisches Material
- ET: Einsinktiefe der Arbeitsfläche des Fördergurtes
- FA1, 2: Fahrzeug
- F: Beförderungseinheit
- G: Fördergurt
- HD: Unterschied zwischen einen ersten und zweiten Höhenniveau
- LR: Laufrichtung
- LU: Befestigungselement
- N: Nocke
- NAR: Nockenabstand
- NH: Nockenhöhe
- RA: Abstand zwischen zwei Achsen
- RE: Rad
- Rn: Rolle
- Rn1, Rn2: erste und zweite Rolle
- UR: Umlenkrolle, Umlenktrommel
- RA: Rollenabstand
- S: Schacht
- ST: Noppen
- STR: Stützrollen
- TR: Trägergerüst
- UL: Führungsleiste

## Patentansprüche

1. Beförderungseinheit (F) zum Transport für radgetriebene Fahrzeuge, in Fahrzeugwaschanlagen,
**dadurch gekennzeichnet,**
**daß** mindestens zwei Umlenkmittel (UR, AR) zur Umlenkung eines Fördergurtes (G) vorgesehen sind,
**daß** Nocken (N) in Abständen auf dem Fördergurt (G) angeordnet sind, wobei der Abstand der Nocken (N) derart auf dem Fördergurt (G) ausgebildet ist, daß mindestens eine Nocke (N) hinter einem Rad (RE) eines zu befördernden Fahrzeuges positionierbar ist,
**daß** unterhalb des Fördergurtes(G) Rollen (Rn) angeordnet sind, wobei die Rollen (Rn) in Kontakt mit der Unterseite des Fördergurtes (G) sind und der Abstand der Rollen zueinander eine Muldenbildung des Fördergurtes (G) ermöglicht , so daß die Auflagefläche des Rades Kraftschlüssig durch die Muldenbildung auf dem Fördergurt positioniert ist.

2. Beförderungseinheit nach Anspruch 1,
**dadurch gekennzeichnet,**
**daß** die Positionierung der Achsen (An) der Rollen (Rn) oder der Durchmesser (D1, D2) der Rollen (Rn1, Rn2) derart aufeinander abgestimmt sind, daß eine Muldenbildung des Fördergurtes (G) bildbar ist.

3. Beförderungseinheit nach einem der vorhergehenden Ansprüche,
**dadurch gekennzeichnet,**
**daß** auf dem Fördergurt (G) eine Vielzahl von Nocken (N) angeordnet sind.

4. Beförderungseinheit nach einem der vorhergehenden Ansprüche,
**dadurch gekennzeichnet,**
**daß** unmittelbar vor den Nocken (N) in Laufrichtung (LR) des Fördergurtes (G) Noppen (ST) angeordnet sind.

5. Beförderungseinheit nach einem der vorhergehenden Ansprüche,
**dadurch gekennzeichnet,**
**daß** die Arbeitsfläche (AG) des Fördergurtes (G) mit einem elastischen Material (EM) versehen ist.

6. Beförderungseinheit nach einem der vorhergehenden Ansprüche,
**dadurch gekennzeichnet,**
**daß** das elastische Material (EM) unterschiedliche Verformungseigenschaften aufweist.

7. Beförderungseinheit nach einem der vorhergehenden Ansprüche,
**dadurch gekennzeichnet,**
**daß** die Dicke und die Zusammensetzung des elastischen Materials (EM) derart ausgestaltet ist, daß ein darauf positioniertes Rad (RE) fixierbar ist.

8. Beförderungseinheit nach einem der vorhergehenden Ansprüche,
**dadurch gekennzeichnet,**
**daß** unmittelbar vor den Nocken (N) des Fördergurtes (G) das elastische Material (EM) angeordnet ist.

9. Beförderungseinheit nach einem der vorhergehenden Ansprüche,
**dadurch gekennzeichnet,**
**daß** die Nocken (N) in gleichmäßigen Abständen (NAR, A) auf dem Fördergurt (G) angeordnet sind.

## Claims

1. Conveying unit (F) for transporting wheel-driven vehicles, in vehicle washing installations, **characterised in that** at least two direction-changing means (UR, AR) are provided to change the direction of a conveyor belt (G), **in that** cams (N) are arranged spaced at intervals on the conveyor belt (G), the spacing of the cams (N) on the conveyor belt (G) being such that at least one cam (N) can be positioned behind a wheel (RE) of a vehicle to be conveyed, **in that** rollers (Rn) are arranged underneath the conveyor belt (G), the rollers (Rn) being in contact with the underside of the conveyor belt (G) and the spacing of the rollers one from another allowing the formation of a depression in the conveyor belt (G) so that the supporting surface of the wheel is positioned frictionally by the depression formed in the conveyor belt.

2. Conveying unit according to claim 1, **characterised in that** the positions of the axes (An) of the rollers (Rn) or the diameters (D1, D2) of the rollers (Rn1, Rn2) are matched to one another such that a depression can be formed in the conveyor belt (G).

3. Conveying unit according to one of the preceding claims, **characterised in that** a plurality of cams (N) are arranged on the conveyor belt (G).

4. Conveying unit according to one of the preceding claims, **characterised in that** protrusions (ST) are arranged directly in front of the cams (N) in the running direction (LR) of the conveyor belt (G).

5. Conveying unit according to one of the preceding claims, **characterised in that** the working surface (AG) of the conveyor belt (G) is covered with an elastic materials (EM).

6. Conveying unit according to one of the preceding claims, **characterised in that** the elastic material (EM) exhibits different deformation properties.

7. Conveying unit according to one of the preceding claims, **characterised in that** the thickness and the composition of the elastic material (EM) are such that a wheel (RE) positioned thereon can be immobilised.

8. Conveying unit according to one of the preceding claims, **characterised in that** the elastic material (EM) is arranged directly in front of the cams (N) of the conveyor belt (G).

9. Conveying unit according to one of the preceding claims, **characterised in that** the cams (N) are arranged spaced at uniform intervals (NAR, A) on the conveyor belt (G).

## Revendications

1. Unité de transport (F) pour le transport des véhicules à roues, dans des stations de lavage de véhicules, **caractérisée en ce qu'**au moins deux moyens de changement de direction (UR, AR) sont prévus pour le changement de direction d'une courroie de convoyeur (G), **en ce que** des cames (N) sont disposées dans des intervalles sur la courroie du convoyeur (G), l'intervalle des cames (N) sur la courroie du convoyeur (G) étant réalisé de sorte qu'au moins une came (N) peut être positionnée derrière une roue (RE) d'un véhicule à transporter, **en ce que** des rouleaux (Rn) sont disposés au-dessous de la courroie du convoyeur (G), les rouleaux (Rn) étant en contact avec la face inférieure de la courroie du convoyeur (G) et l'intervalle des rouleaux les uns par rapport aux autres permettant une formation en auge de la courroie du convoyeur (G), de sorte que la surface d'appui de la roue est positionnée de façon à être entraînée par adhérence par la formation en auge sur la courroie du convoyeur.

2. Unité de transport selon la revendication 1, **caractérisée en ce que** le positionnement des axes (An) des rouleaux (Rn) ou les diamètres (D1, D2) des rouleaux (Rn1, Rn2) sont ajustés les uns sur les autres de sorte qu'une formation en auge de la courroie du convoyeur (G) peut être formée.

3. Unité de transport selon l'une quelconque des revendications précédentes, **caractérisée en ce que** de nombreuses cames (N) sont disposées sur la courroie du convoyeur (G).

4. Unité de transport selon l'une quelconque des revendications précédentes, **caractérisée en ce que** des nopes (ST) sont disposées directement devant les cames (N) dans le sens de marche (LR) de la courroie du convoyeur (G).

5. Unité de transport selon l'une quelconque des revendications précédentes, **caractérisée en ce que** la surface de travail (AG) de la courroie du convoyeur (G) est pourvue d'un matériau élastique (EM).

6. Unité de transport selon l'une quelconque des revendications précédentes, **caractérisée en ce que** le matériau élastique (EM) présente différentes propriétés de déformation.

7. Unité de transport selon l'une quelconque des revendications précédentes, **caractérisée en ce que** l'épaisseur et la structure du matériau élastique (EM) sont disposées de telle sorte qu'une roue (RE) positionnée sur celui-ci peut être fixée.

8. Unité de transport selon l'une quelconque des revendications précédentes, **caractérisée en ce que** le matériau élastique (EM) est disposé directement devant les cames (N) de la courroie du convoyeur (G).

9. Unité de transport selon l'une quelconque des revendications précédentes, **caractérisée en ce que** les cames (N) sont disposées à intervalles réguliers (NAR, A) sur la courroie du convoyeur (G).
